# EUROPÄISCHE PATENTANMELDUNG

(11) **EP 0 611 791 A1**
(43) Veröffentlichungstag der Anmeldung: **24.08.1994**
(21) Anmeldenummer: 94101788.1
(22) Anmeldetag: 07.02.1994
(51) Int. Cl.: C08J 7/12

(54) **Verfahren zur Behandlung der Oberfläche von Gegenständen**

(30) Priorität: 17.02.1993 DE 4304792
(71) Anmelder: Möller, Bernd, Dipl-Ing., D-36341 Lauterbach (DE); Jonda, Michael, Dipl-Ing., D-84061 Ergoldsbach (DE)
(72) Erfinder: Möller, Bernd, Dipl-Ing., D-36341 Lauterbach (DE); Jonda, Michael, Dipl-Ing., D-84061 Ergoldsbach (DE)
(74) Vertreter: Schlagwein, Udo, Dipl.-Ing.

(57) **Zusammenfassung**

Bei einem Verfahren zur Behandlung der Oberfläche von Gegenständen mit einem Fluor enthaltenden Gas in einer Reaktionskammer werden die Gegenstände zunächst mit einer eine schädliche Erwärmung der zu behandelnden Gegenstände ausschließenden, geringen Fluorkonzentration in der Reaktionskammer behandelt und anschließend nach einer ersten Konditionierung der Oberfläche der Gegenstände durch Erhöhung der Fluorkonzentration die Behandlung fortgesetzt. Dadurch ist eine rasche Fluorierung ohne Überhitzungsgefahr der Gegenstände möglich.

## Beschreibung

Die Erfindung betrifft ein Verfahren zur Behandlung der Oberfläche von Gegenständen mit einem Fluor enthaltenden Gas in einer Reaktionskammer. Ein solches Verfahren ist beispielsweise in der DE-C-26 44 508 beschrieben.

Die Fluorbehandlung dient bei Kunststoffgegenständen insbesondere dazu, die Haftfähigkeit von Oberflächen zu verbessern oder aber ihre Permeation zu reduzieren. Eine Erhöhung der Haftfähigkeit ist beispielsweise erforderlich, wenn Kunststoffoberflächen beschichtet oder bedruckt werden sollen. Bei Kraftstofftanks für Kraftfahrzeuge kommt es darauf an, daß die Permeation für Kraftstoff möglichst gering ist, was durch Aufbringen einer Barriereschicht durch die Fluorbehandlung erreicht werden kann.

Bei dem durch die DE-C-26 44 508 bekannten Verfahren wird in einer Gasvorratskammer das fluorhaltige Verhandlungsgas durch Mischen mit der gewünschten Zusammensetzung gebildet. Dieses Behandlungsgas gibt man zur Einwirkung auf die zu behandelnden Gegenstände in die Reaktionskammer, läßt es dort bei Temperaturen von etwa 80°C eine vorgegebene Zeit auf die Gegenstände einwirken und fördert es dann zurück in die Gasvorratskammer.

Reaktionen von Fluor mit organischen Verbindungen verlaufen stark exotherm. Da während der Fluorbehandlung in der Reaktionskammer Unterdruck herrscht und die Gasatmosphäre stillsteht, wird relativ wenig Wärme von den Gegenständen nach außen in die Reaktionskammer abgegeben. Deshalb ist bei dem bekannten Verfahren die Gefahr relativ groß, daß es zu einer Überhitzung der zu behandelnden Kunststoffteile kommt, was insbesondere zu Verformungen, Frakmentierungen und Kettenbrüchen führen kann- Die Überhitzungsgefahr könnte zwar vermindert werden, wenn man mit geringeren Temperaturen als 80°C arbeiten könnte, jedoch käme dann entweder keine ausreichende Reaktion mit dem Fluor zustande, oder aber die Reaktionsgeschwindigkeit wäre so gering, daß sich unwirtschaftlich lange Behandlungszeiten ergeben würden.

Der Erfindung liegt das Problem zugrunde, ein Verfahren der eingangs genannten Art so auszubilden, daß die Gefahr einer Überhitzung der zu behandelnden Gegenstände möglichst gering ist, ohne daß dadurch die Behandlungsdauer unerwünscht stark zunimmt.

Dieses Problem wird erfindungsgemäß dadurch gelöst, daß die Gegenstände in der Reaktionskammer zunächst mit einer eine schädliche Erwärmung der zu behandelnden Gegenstände ausschließenden, geringen Fluorkonzentration in der Reaktionskammer behandelt werden und anschließend nach einer ersten Konditionierung der Oberfläche der Gegenstände durch Erhöhung der Fluorkonzentration die Behandlung fortgesetzt wird.

Durch diese Verfahrensweise verlangsamt sich zu Beginn des Fluorierungsvorganges die chemische Reaktion des Fluors mit der Oberfläche der zu behandelnden Gegenstände wesentlich. Dadurch steht genügend Zeit zur Abfuhr der entstehenden Reaktionswärme zur Verfügung, so daß Überhitzungen nicht zu befürchten sind. Sobald die Gegenstände einmal konditioniert, die Gegenstände gewissermaßen versiegelt sind, kann man die Konzentration des Fluors erhöhen und dadurch mit größerer Geschwindigkeit die Fluorbehandlung fortsetzen. Erfahrungsgemäß entsteht nach einer ersten Konditionierung weit weniger Wärme, so daß man die anfängliche, relativ geringe Reaktionsgeschwindigkeit durch eine spätere, hohe Reaktionsgeschwindigkeit ausgleichen kann. Da dank der Erfindung in der zweiten Behandlungsphase hohe Fluorkonzentrationen möglich sind, kann man mit relativ niedrigen Temperaturen arbeiten, ohne daß unerwünscht lange Reaktionszeiten entstehen, was wiederum der Gefahr einer Überhitzung entgegenwirkt.

Eine vorteilhafte Weiterbildung des erfindungsgemäßen Verfahrens besteht darin, daß während der Behandlung für eine Relativbewegung zwischen der Gasatmosphäre in der Reaktionskammer und der Oberfläche der Gegenstände gesorgt wird. Eine solche Relativbewegung führt zu einem zweifach positiven Effekt. Zum einen wird die an den Oberflächen der zu behandelnden Gegenstände entstehende Warme durch Konvektion gegenüber einer ruhenden Gasatmosphäre wesentlich besser abgeführt, zum anderen kommt es zu einer besseren Einwirkung des Fluors auf die Oberflächen der Gegenstände, was geringere Fluorkonzentrationen erlaubt oder die Behandlungsdauer herabsetzt. Die geringere erforderliche Fluorkonzentration vermindert den Entsorgungsaufwand.

Die gewünschte Relativbewegung könnte durch Umwälzen des Behandlungsgases erreicht werden, so daß in der Reaktionskammer eine Gasströmung entsteht. Mit besonders geringem Aufwand ist sie zu erreichen, wenn gemäß einer anderen Weiterbildung der Erfindung die Relativbewegung durch eine Umlaufbewegung eines die Gegenstände tragenden, in der Reaktionskammer angeordneten Aufnahme erzeugt wird.

Der Sauerstoffgehalt in der Reaktionskammer während der Fluorbehandlung beeinflußt das Fluorierungsverfahren erheblich. Bei der Fluorierung von Hohlkörpern aus Kunststoff gegen Permeation von Kohlenwasserstoffen soll möglichst kein Sauerstoff in der Reaktionskammer vorhanden sein. Bei anderen Anwendungsfällen kann man durch exaktes Vorgeben eines Restsauerstoffgehaltes ganz gezielte Oberflächeneffekte erreichen. Deshalb ist es vorteilhaft, wenn vor Beginn der Fluorbehandlung der Sauerstoff in der Reaktionskammer durch die Wahl der Abpumpdauer auf einen für die zu behandelnden Gegenstände optimalen Wert eingestellt wird.

Der Sauerstoffgehalt in der Reaktionskammer läßt sich rasch ganz besonders gering einstellen, wenn vor Beginn der Fluorbehandlung der Sauerstoffgehalt in der Reaktionskammer durch Abpumpen, Spülen mit einem Inertgas und ein erneutes Abpumpen auf einen für die zu behandelnden Gegenstände optimalen Wert eingestellt wird.

Die zu behandelnden Gegenstände weisen oftmals auf ihrer Oberfläche Verunreinigungen auf, beispielsweise Ölreste, die von der Druckluftversorgung bei ihrer Herstellung in der Blasform stammen. Solche Verunreinigungen führen zu einer Veränderung der Reaktionsdauer und des Reaktionsverlaufes. Um für unterschiedlich verunreinigte Gegenstände für das Fluorierungsverfahren gleiche Anfangsvoraussetzungen zu schaffen, ist es vorteilhaft, wenn gemäß einer anderen Weiterbildung der Erfindung zur Entfernung von Verunreinigungen auf den zu behandelnden Gegenständen ein Reinigungsvorgang in der Reaktionskammer mit einer schwachen Fluorkonzentration vorgenommen wird, anschließend das Gas aus der Reaktionskammer entfernt und anschließend die eigentliche Fluorbehandlung mit zunächst geringer und anschließend höherer Fluorkonzentration erfolgt.

Vorteilhaft ist es auch, wenn während der Fluorbehandlung Fremdgase in die Reaktionskammer eingegeben werden. Hierdurch kann man die Eigenschaften der durch die Fluorierung erzeugten Schichten vielfältig beeinflussen. Durch die Zugabe von Fremdgasen vermindert sich zwar die Konzentration des Fluors, was jedoch für den Verfahrensablauf nicht nachteilig ist, wenn nur darauf geachtet wird, daß die Fluorkonzentration zur ersten Konditionierung schwach und anschließend zunächst gesteigert wird.

Eine besonders hohe Sicherheit gegen eine Überhitzung der zu behandelnden Gegenstände erreicht man, wenn in der Reaktionskammer eine zumindest nahe der Raumtemperatur liegende Temperatur eingestellt wird.

Stets konstante Reaktionsbedingungen aufgrund einer konstanten Temperatur lassen sich unabhängig von den beispielsweise jahreszeitlich bedingten Schwankungen der Umgebungstemperatur erreichen, wenn in der Reaktionskammer eine geringfügig über der Raumtemperatur liegende Temperatur eingestellt wird.

Zur weiteren Verdeutlichung der Erfindung ist in einem Diagramm der Druck in der Reaktionskammer in Abhängigkeit vom zeitlichen Verlauf des Verfahrens dargestellt.

Im mit a gekennzeichneten Bereich wird die Reaktionskammer zunächst evakuiert. Dann gibt man in die Reaktionskammer beispielsweise N₂ ein und evakuiert erneut. Dieser der Vorspülung dienende Bereich wurde mit b markiert. Ihm schließt sich ein Bereich c an, in dem die Gegenstände mit einer geringen Fluorkonzentration vorgereinigt werden. Da hierbei Verunreinigungen in die Fluoratmosphäre gelangen, wird gegen Ende der Phase C das Behandlungsgas in der Reaktionskammer wieder abgesaugt.

Die eigentliche Fluorbehandlungsphase d folgt anschließend. In ihr wird in mehreren Stufen die Fluorkonzentration erhöht, um Barriereschichten auf den zu behandelnden Gegenständen zu erzeugen. Gegen Ende dieser Behandlung kann man im Bereich e beispielsweise Sauerstoff als zusätzliches Gas in die Reaktionskammer eingeben. Danach wird die Reaktionskammer erneut mit N₂ gespült, um Fluorreste in ihr vollständig zu entfernen, bevor die Reaktionskammer zur Entnahme der behandelten Gegenstände geöffnet wird.

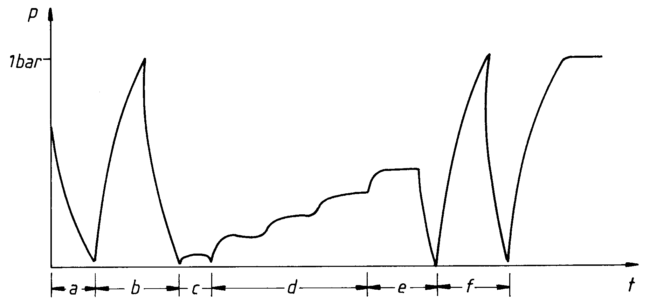

## Patentansprüche

1. Verfahren zur Behandlung der Oberfläche von Gegenständen mit einem Fluor enthaltenden Gas in einer Reaktionskammer, **dadurch gekennzeichnet,** daß die Gegenstände in der Reaktionskammer zunächst mit einer eine schädliche Erwärmung der zu behandelnden Gegenstände ausschließenden, geringen Fluorkonzentration in der Reaktionskammer behandelt werden und anschließend nach einer ersten Konditionierung der Oberfläche der Gegenstände durch Erhöhung der Fluorkonzentration die Behandlung fortgesetzt wird.

2. Verfahren nach Anspruch 1, **dadurch gekennzeichnet,** daß während der Behandlung für eine Relativbewegung zwischen der Gasatmosphäre in der Reaktionskammer und der Oberfläche der Gegenstände gesorgt wird.

3. Verfahren nach Anspruch 2, **dadurch gekennzeichnet,** daß die Relativbewegung durch eine Umlaufbewegung eines die Gegenstände tragenden, in der Reaktionskammer angeordneten Aufnahme erzeugt wird.

4. Verfahren nach zumindest einem der vorangehenden Ansprüche, **dadurch gekennzeichnet,** daß vor Beginn der Fluorbehandlung der Sauerstoffgehalt in der Reaktionskammer durch die Wahl der Abpumpdauer auf einen für die zu behandelnden Gegenstände optimalen Wert eingestellt wird.

5. Verfahren nach zumindest einem der vorangehenden Ansprüche, **dadurch gekennzeichnet,** daß vor Beginn der Fluorbehandlung der Sauerstoffgehalt in der Reaktionskammer durch Abpumpen, Spülen mit einem Inertgas und erneutes Abpumpen auf einen für die behandelnden Gegenstände optimalen Wert eingestellt wird.

6. Verfahren nach zumindest einem der vorangehenden Ansprüche, **dadurch gekennzeichnet,** daß zur Entfernung von Verunreinigungen auf den zu behandelnden Gegenständen ein Reinigungsvorgang in der Reaktionskammer mit einer schwachen Fluorkonzentration vorgenommen wird, anschließend das Gas aus der Reaktionskammer entfernt und anschließend die eigentliche Fluorbehandlung mit zunächst geringer und anschließend höherer Fluorkonzentration erfolgt.

7. Verfahren nach zumindest einem der vorangehenden Ansprüche, **dadurch gekennzeichnet,** daß während der Fluorbehandlung Fremdgase in die Reaktionskammer eingegeben werden.

8. Verfahren nach zumindest einem der vorangehenden Ansprüche, **dadurch gekennzeichnet,** daß in der Reaktionskammer eine zumindest nahe der Raumtemperatur liegende Temperatur eingestellt wird.

9. Verfahren nach Anspruch 7, **dadurch gekennzeichnet,** daß in der Reaktionskammer eine geringfügig über der Raumtemperatur liegende Temperatur eingestellt wird.
